(19) Europäisches Patentamt / European Patent Office / Office européen des brevets

(11) **EP 1 452 935 B1**

(12) **EUROPEAN PATENT SPECIFICATION**

(45) Date of publication and mention
of the grant of the patent:
**31.12.2008 Bulletin 2009/01**

(51) Int Cl.:
*G05B 13/02* (2006.01)     *G06N 3/00* (2006.01)

(21) Application number: **04004440.6**

(22) Date of filing: **26.02.2004**

(54) **Control system using immune network and control method**

Steuersystem und -verfahren mit Immunnetzwerk

Système et procédé de commande utilisant un réseau immunitaire

(84) Designated Contracting States:
**DE FR**

(30) Priority: **28.02.2003 JP 2003054850**

(43) Date of publication of application:
**01.09.2004 Bulletin 2004/36**

(73) Proprietor: **Fuji Jukogyo Kabushiki Kaisha**
**Tokyo (JP)**

(72) Inventors:
• **Matsuda, Kazuhiko**
**Tokyo (JP)**
• **Nohara, Tsutomu**
**Tokyo (JP)**

(74) Representative: **Vossius & Partner**
**Siebertstrasse 4**
**81675 München (DE)**

(56) References cited:
• **ISHIGURO A ET AL: "Immunoid: an architecture for behavior arbitration based on the immune networks" INTELLIGENT ROBOTS AND SYSTEMS '96, IROS 96, PROCEEDINGS OF THE 1996 LEEE/RSJ INTERNATIONAL CONFERENCE ON OSAKA, JAPAN 4-8 NOV. 1996, NEW YORK, NY, USA,IEEE, US, vol. 3, 4 November 1996 (1996-11-04), pages 1730-1738, XP010212550 ISBN: 0-7803-3213-X**
• **MICHELAN R ET AL: "Decentralized control system for autonomous navigation based on an evolved artificial immune network" EVOLUTIONARY COMPUTATION, 2002. CEC '02. PROCEEDINGS OF THE 2002 CONGRESS ON MAY 12-17, 2002, PISCATAWAY, NJ, USA,IEEE, vol. 2, 12 May 2002 (2002-05-12), pages 1021-1026, XP010590581 ISBN: 0-7803-7282-4**
• **MESHREF H ET AL: "Artificial immune systems: application to autonomous agents" SYSTEMS, MAN, AND CYBERNETICS, 2000 IEEE INTERNATIONAL CONFERENCE ON NASHVILLE, TN, USA 8-11 OCT. 2000, PISCATAWAY, NJ, USA,IEEE, US, vol. 1, 8 October 2000 (2000-10-08), pages 61-66, XP010523378 ISBN: 0-7803-6583-6**
• **DONG-WOOK LEE ET AL: "Artificial immune network-based cooperative control in collective autonomous mobile robots" ROBOT AND HUMAN COMMUNICATION, 1997. RO-MAN '97. PROCEEDINGS., 6TH IEEE INTERNATIONAL WORKSHOP ON SENDAI, JAPAN 29 SEPT.-1 OCT. 1997, NEW YORK, NY, USA,IEEE, US, 29 September 1997 (1997-09-29), pages 58-63, XP010263175 ISBN: 0-7803-4076-0**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

The present invention relates to a control system and a method for autonomously controlling an operation of a robot or the like serving as a control target device by using an immune network.

Recently, attention has been paid to a method of autonomously controlling each type of control target devices in consideration of the dynamic variation of an environment by industrially modeling an information processing mechanism of a living body. This type of information processing mechanism is classified into sub-systems such as a cranial nerve system, a genetic system, an immune system, etc. With respect to the cranial nerve system and the genetic system in these sub-systems, they have been already industrially modeled as a neural network and a genetic algorithm, and applied to various fields.

In connection with the recent development of immunological researches, it has been found out that various types of lymph cells excluding foreign matters within/out of living bodies (cancer cells, virus, etc.) make mutual communications with each another, thereby constituting an autonomous and dispersive network. The number of foreign matters which living bodies encounter is extremely large, and it is impossible to predict them. The mechanism of the immune system that has properly dealt with dynamically varying environments and implemented continued existence of individuals has been expected to be industrially implemented as a new processing method different from the cranial nerve system. With respect to this point, a non-patent document 1 discloses an approach to a behavior arbitration mechanism for robots by using the immune system. According to this non-patent document 1, information on the external environment and internal state detected by sensors equipped to a robot is regarded as antigens (foreign matters) whereas, an element behavior module group of the robot is regarded as antibodies (lymph cells). The element behavior of the robot is determined by calculating the concentration of the antibodies on the basis of the stimulant/suppressive action between the antibodies and then selecting an antibody (element behavior module) that provides the maximum concentration.

[Non-patent Document 1]

Toshiyuki Kondo, two others: "An Emergent Approach to Construct Behavior Arbitration Mechanism for Autonomous Mobile Robot", collected papers of Society of Instrument and Control Engineers, Vol. 33, No. 1, pp.1-9, January 9, 1997

When the robot acts according to the element behavior thus determined, the antibody corresponding to the element behavior concerned not only affects the other antibodies, but also affects the antibody concentration of the antibody concerned itself with time. Therefore, according to the approach described in the non-patent document 1, the concentration calculation is repeated in the feedback style to select an antibody that provides the maximum concentration in consideration of the effect on the antibody concerned itself. However, when the concentration calculation is repeated in the feedback style, the antibody concentration may become a periodic solution. The value of the periodic solution does not converge to a fixed value, and thus the difference in concentration between the antibodies varies with respect to the time, so that the antibody to be selected varies in accordance with the time at which a judgment is carried out. Therefore, the element behavior corresponding to the determined antibody does not necessarily correspond to the optimum behavior for the robot.

The present invention has been implemented in view of the foregoing situation, and has an object to provide a new method for autonomously controlling the behavior of a control target device based on the stimulating action and suppressing action of an antibody in an immune network.

Furthermore, another object of the present invention is to suppress a periodic solution in calculation of antibody concentration.

In order to solve such problems, a first invention provides a control system for selecting an antibody module from plural antibody modules based on a stimulating action and a suppressing action of an antibody in an immune network and controlling a control target device in accordance with a control content defined by the antibody module, which is equipped with plural antibody modules, an operating unit, a convergence controlling unit, and an antibody estimating unit. According to the control system, stimulating conditions to the control target device, control contents associated with the stimulating conditions and affinity to other antibody modules are defined for the plural antibody modules, in which the respective stimulating conditions are different from one another. The operating unit calculates an antibody concentration serving as an index when each of the antibody modules is selected as a processing target. The convergence judging unit judges based on the calculated antibody concentration and a predetermined target value whether the antibody concentration is converged to the target value. The convergence controlling unit calculates a correction parameter to correct the antibody concentration so that the antibody concentration approaches to the target value if the convergence judging unit judges that the antibody concentration is not converged to the target value. The antibody estimating unit calculates an estimation value to estimate the antibody module if the convergence judging unit judges that the antibody concentration is converged to the target value, and selects some antibody module from the plural antibody modules based on each estimation value calculated for the plural antibody modules.

In the first invention, the convergence controlling unit preferably includes plural convergence controlling modules for calculating the correction parameter so that a degree of bringing the antibody concentration close to the target value is different among the convergence controlling modules, and a control selecting unit for selecting a convergence controlling module from the plural convergence controlling modules in accordance with an external environment of the control target device. In this case, the convergence controlling unit preferably determines the correction parameter for correcting the antibody concentration on the basis of the correction parameter calculated by the convergence controlling module thus selected. Here, each of the convergence controlling modules may calculate the correction parameter by using a genetic algorithm, a neural network or PID control. Furthermore, the control selecting unit may select some antibody module from the plural convergence controlling modules by using the neural network or the genetic algorithm.

Additionally, in the first invention, the antibody estimating unit preferably calculates an integration value of the antibody concentration until the antibody concentration is converged to the target value as the estimation value, and selects an antibody module that corresponds to the maximum calculated estimation value.

A second invention provides a control method for selecting, on the basis of a stimulating action and a suppressing action of an antibody in an immune network, some antibody module from plural antibody modules for which stimulating conditions to a control target device, control contents associated with the stimulating conditions and affinity to other antibody modules are defined, the respective stimulating conditions being different from one another, and controlling the control target device in accordance with a control content defined by the antibody module thus selected. The control method includes a first step of calculating an antibody concentration serving as an index when each of the antibody modules is selected as a processing target, a second step of judging, on the basis of the calculated antibody concentration and a predetermined target value, whether the antibody concentration is converged to the target value, a third step of calculating a correction parameter to correct the antibody concentration so that the antibody concentration approaches to the target value if it is judged by the second step that the antibody concentration is not converged to the target value, a fourth step of calculating an estimation value to estimate the antibody module if it is judged in the second step that the antibody concentration is converged to the target value, and a fifth step of selecting some antibody module from the plural antibody modules on the basis of each estimation value calculated for the plural antibody modules.

In the second invention, the third step preferably includes steps of calculating plural correction parameters so that a degree of bringing the antibody concentration close to the target value is different from each other, selecting some correction parameter from the plural correction parameters in accordance with an external environment of the control target device, and determining a correction parameter to correct the antibody concentration on the basis of the correction parameter thus selected. Alternatively, the third step may includes steps of selecting, in accordance with an external environment of the control target device, some correction level from plural correction levels in which a degree of bringing the antibody concentration close to the target value is different from each other, and calculating the correction parameter on the basis of the correction level thus selected.

Further, in the second invention, the fourth step preferably calculates an integration value of the antibody concentration until the antibody concentration is converged to the target value as the estimation value. In addition, the fifth step preferably selects an antibody module that provides the maximum calculated estimation value. By way of example only, specific embodiments of the present invention will now be described, with reference to the accompanying drawings, in which:

Fig. 1 is a block diagram showing an overall construction of a control system according to a present embodiment;
Fig. 2 is a diagram showing an operating environment of a robot;
Fig. 3 is a diagram showing a moving direction of the robot and an obstacle detectable range;
Fig. 4 is a diagram showing an antigen;
Fig. 5 is a diagram showing an antibody;
Fig. 6 is a diagram showing a relationship of stimulation on an antibody module;
Fig. 7 is a diagram showing a basic construction of a neural network NN;
Fig. 8 is a flowchart showing a system process of a control system according to the present embodiment;
Fig. 9 is a diagram showing an example of a periodic solution; and
Fig. 10 is a diagram showing a modification of a convergence controlling unit.

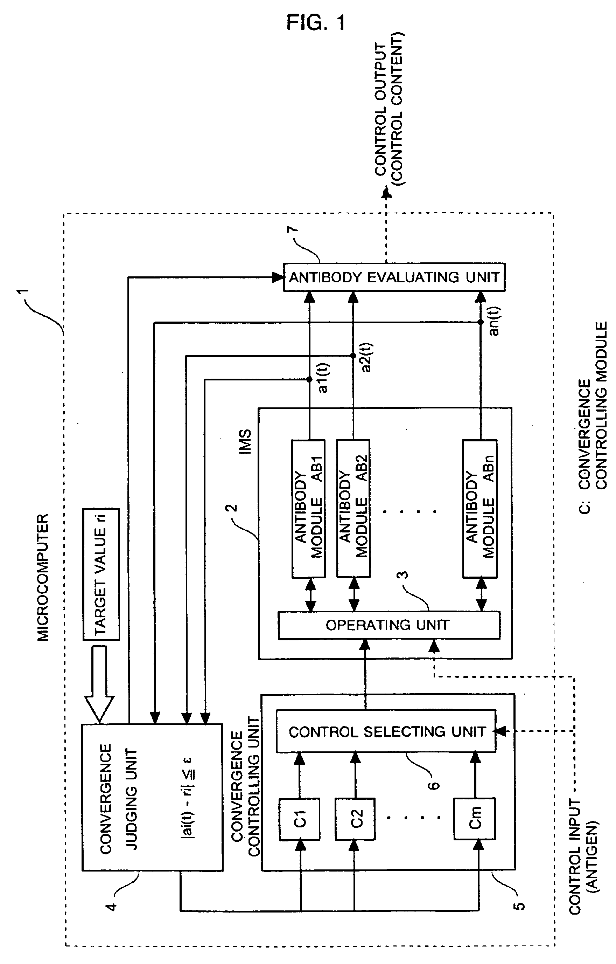

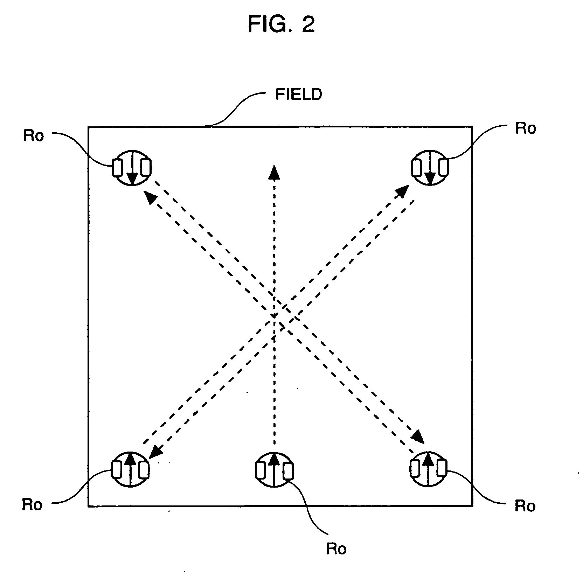

Fig. 1 is a block diagram showing an overall construction of a control system according to a present embodiment. The control system 1 autonomously controls a behavior (running) of a robot Ro serving as a control target device based on stimulating and suppressing mechanisms (stimulant/suppressive action) of an antibody in an immune network. One feature of the control system 1 is that, in a dynamic environment under which plural robots Ro run concurrently, the control system 1 controls the robots Ro to move to their destinations while preventing collision of the robots Ro to each other by establishing mutual harmonization among the robots Ro. Fig. 2 is a diagram showing an operating environment of the robots Ro, and illustrates five robots Ro. Each robot Ro is initially placed at an edge position (four corners and one side) in a field represented by a square. As shown in Fig. 2, the respective robots Ro run to destinations existing in directions as indicated by broken-line arrows.

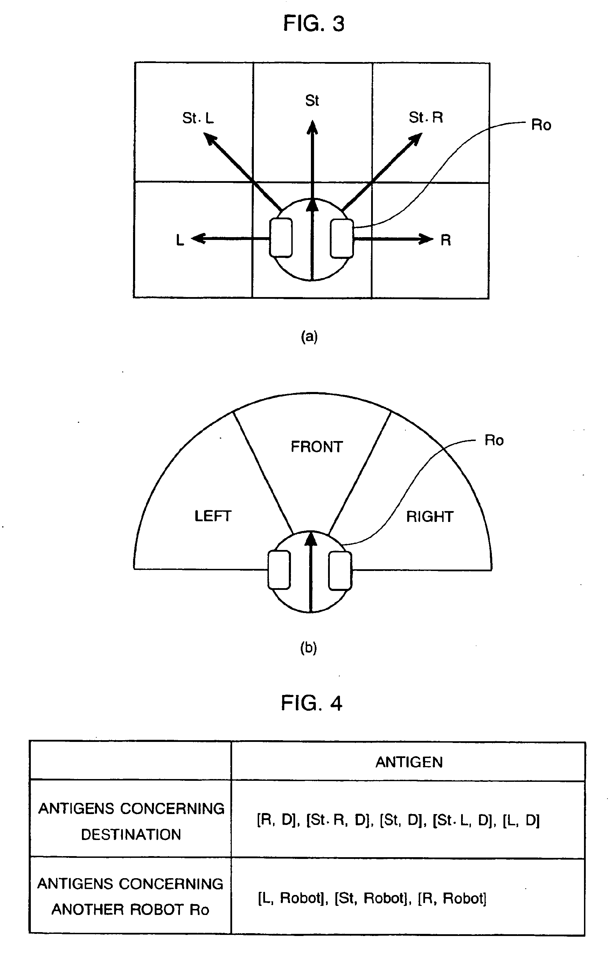

Fig. 3 is a diagram showing moving directions of the robot Ro and an obstacle detectable range. As shown in Fig 3(a), the robot Ro can move in five directions, that are, forward St, rightward R, leftward L, obliquely rightward St.R and obliquely leftward St. L by controlling two wheels independent to each other. This robot Ro is equipped with an obstacle monitoring sensor (not shown in figures) including various types of sensors such as a camera, a laser radar, or a combination thereof. Therefore, the robot Ro can detect information on the distance to an obstacle (for example, another robot Ro) or it's destination and the direction to the destination (the front side, the right side, the left side), etc. The information on the obstacle and the destination as described above is input to the control system 1 as a control input as described later.

A biological immune system on which an immune network is dependent, and the immune network will be described initially.

Subsequently, the system construction and system process of the control system 1 will be described. The biological immune system is a mechanism that protects a living body from antigens which are foreign matters within or from outside the living body, such as virus, cancer cells, etc. The main constituent elements of the immune system correspond to a group of cells called lymph cells, which is classified into two types of cells, B cells and T cells. The B cell is a lymph cell generated in bone marrow, and secretes(produces) antibodies which are Y-shaped protein from the surface thereof. This antibody proliferates by reacting with the antigens, and plays a role for excluding the antigens (an antigen-antibody reaction). Each type of the antigens has a site called an epitope that is an antigen determinant representing the feature of the antigen. On the other hand, each type of the antibodies has an antigen recognizing site (a receptor) called a paratope that is an antigen-binding site. The B cell recognizes the antigen through the specific reaction between the epitope of the antigen and the paratope of the antibody like a key and a key hole. When recognizing the antigen, the antibody is stimulated by the antigen to proliferate, so that the secretion amount of the antibody is increased. Accordingly, the antigen is suppressed by the antibody thus proliferating, and finally excluded. Furthermore, according to recent immunological studies, there has been found the fact that the antibody itself also has an antigen determinant representing the characteristic thereof, and the antigen determinant owned by the antibody is called an idiotope.

This point will be specifically described. First, the relationship between the antigen and the antibody will be described. When some antigen invades into a living body, the antigen stimulates an antibody (for example, an antibody AB1) having the "key and key-hole" relationship with the antigen, and a B cell B1 producing the antibody AB1. Consequently, the antibody AB1 and the B cell B1 are stimulated to proliferate, thereby suppressing and excluding the antigen. Next, the relationship between antibodies will be described. For example, it is assumed that an idiotope Id1 of the antibody AB1 has the "key and key-hole" relationship with a paratope P2 of an antibody AB2 different from the antibody AB1. That is, the antibody AB1 acts as an antigen to the antibody AB2, and stimulates a B cell B2 producing the antibody AB2 through the paratope of the antibody AB2. The antibody AB2 released from the B cell B2 thus stimulated suppresses the antibody AB1. In addition, it is assumed that the paratope P1 of the antibody AB1 has the "key and key-hole" relationship with an idiotope Id3 of an antibody AB3. That is, the antibody AB3 is regarded as an antigen by the antibody AB1, and stimulates the B cell B1 producing the antibody AB1. The antibody AB1 released from the B cell B1 thus stimulated suppresses a B cell B3 producing the antibody AB3.

Based on the above-described fact, the following immune network hypothesis has been proposed. Specifically, a stimulation/suppression relationship existing between the epitope of the antigen and the paratope of the antibody further exists between the paratope and the idiotope of the respective antibodies. Continued existence of each individual antibody is achieved by forming a large-scale mesh-type antibody network as an entire system. In other words, the antibody network indicates a system in that respective types of antibodies are not floated in an uncoordinated fashion in a living body, but recognize antigens with communicating to each other and proliferate with stimulating/suppressing the other antibodies as occasion demands, thereby excluding the antigens.

Comparing a biological immune system and the control of the robot Ro on the basis of the above-described immune network hypothesis, both have the following correlation with each other. First, the information (control input) on an external environment detected by the sensors of the robot Ro can be regarded as antigens invading into a living body. Next, the element behaviors that the robot Ro may take (an forward movement, an right-hand turn, a left-hand turn, etc.) can be regarded as antibodies. The interaction among the element behaviors can be replaced by the stimulant/suppressive action between the antibodies in the immune network. Therefore, there can be achieved a control method for properly dealing with a dynamically varying environment (that is, realizing the existence of individuals) by autonomously selecting a proper element behavior of the robot Ro based on the interaction among the element behaviors to the present external environment. As described above, the control system 1 according to the present embodiment utilizes an algorithm imitating the biological immune system based on the stimulant/suppressive action of the immune network.

The control system 1 using the immune network will be described again with reference to Fig. 1. As the control system 1 may be used a microcomputer comprising a CPU, a RAM, a ROM, an input/output interface, etc. In case of viewing the control system 1 functionally, the control system 1 includes an immune system (hereinafter merely referred to as an "IMS") 2, a convergence judging unit 4, a convergence controlling unit 5 and an antibody estimating unit 7. The control system 1 according to the present embodiment is different from a normal control system based on the immune network (also called as a "behavior arbitration mechanism") in that the convergence judging unit 4 and the convergence controlling unit 5 are equipped at some point in a feedback loop returning a part of the output of an IMS 2 to the input thereof. The details of these constituent elements of the control system 1 will be described hereunder.

The IMS 2 corresponding to the antibody in the immune system includes antibody modules ABi of n (i = 1 to n) and an operating unit 3. Each antibody module ABi includes a paratope and an idiotope. For the paratope are defined the corresponding relationship between a stimulating condition when the antibody module ABi concerned is selected (also called as a "precondition"), and a control content for the robot Ro (that is, the element behavior of the robot Ro). For example, when the stimulating condition is "a destination exists ahead", the control content corresponding to this stimulating condition is "move forward" , and when the stimulating condition is "another robot Ro exists at the left side", the control content corresponding to this stimulating condition is "move forward in an obliquely right-hand direction". On the other hand, for the idiotope are defined other antibody modules ABk (k = 1 to n: K ≠ i) which are affected by the control content of the antibody module ABi, that is, the ID numbers (1 to n) of the antibody modules ABk stimulated by the antibody module ABi. In addition to the ID numbers, the degree mik of stimulation called as affinity among antibodies (hereinafter merely referred to as "affinity") is also defined in association with the ID number of each antibody module ABk for the idiotope. For instance, it is assumed that the stimulating condition of the antibody module ABi is "a destination exists ahead", and the control content corresponding to this stimulating condition is "move forward". In this case, for the idiotope of the antibody module ABi are defined the ID number of the antibody module ABk having the stimulating condition, for example, "another robot exists ahead" and the affinity mik given to the antibody module ABk.

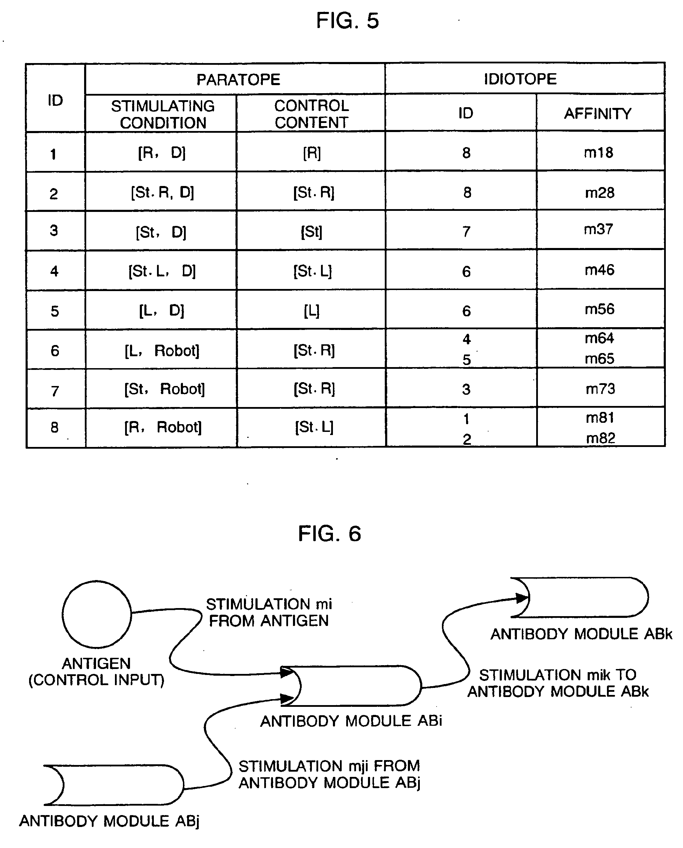

Fig. 4 is a diagram showing antigens, and specifically shows eight antigens. Additionally, Fig. 5 is a diagram showing antibodies, and specifically shows eight antibodies to which the antigens shown in Fig. 4 are provided as stimulating conditions. The antigens contain antigens concerning destinations and antigens concerning other robots Ro. "D"shown in Fig.4 means a destination, and "Robot" means another robot Ro. [*, D] represents an antigen indicating that a destination exists in the direction of [*], and [*, Robot] represents an antigen indicating that another robot exists in the direction of [*]. The number of antigens corresponds to the number of stimulating conditions, whereas "n" antibody modules ABi whose number corresponds to the number of the stimulating conditions are equipped. Therefore, the antibody modules ABi for which the paratope and the idiotope defined as described above are determined in association with the antigens as shown in Fig. 5.

Each antibody module ABi is estimated according to the degree of properness of the control content thereof under the present situation, that is, the antibody concentration corresponding to the state variable serving as an index for selecting the antibody module ABi. The antibody concentration corresponds to a self-assertion degree of each antibody module ABi. Basically, the higher the antibody concentration of an antibody module ABi is, the higher the probability of selecting the antibody module ABi is. The antibody concentration is calculated by the operating unit 3 constituting IMS 2. Specifically, the antibody concentration ai (t) of the antibody module ABi at a time t can be derived by using the following equation 1.

**[Equation 1]**

$$\frac{dai(t)}{dt} = (mi + \frac{\sum_{j=1}^{N} mji \cdot aj(t)}{N} - \frac{\sum_{k=1}^{N} mik \cdot ak(t)}{N}) \; ai(t) + ul(t)$$

In this equation, mi represents the affinity between the paratope of the antibody module ABi and the antigen, and indicates the distance to the antigen, the angle and the type quantitatively. "mji" represents the affinity between the paratope of the antibody module ABi and the idiotope of the antibody module ABj (j = 1 to n : j ≠ i) stimulating the antibody module ABi. "aj(t)" represents the antibody concentration of the antibody module ABj at the time t, whereas ak(t) represents the antibody concentration of the antibody module ABk at the time t. Further, ul(t) represents a correction parameter determined by the convergence controlling unit 5 described later.

Fig. 6 is a diagram showing the correlation of stimulation regarding an antibody module ABi. The affinity mi (the first term on the right side) of the above equation 1 represents stimulation from the antigen to the antibody module ABi. The product (the second term on the right side) between the antibody concentration aj (t) and the affinity mji represents stimulation from another antibody module ABj to the antibody module ABi. The product (the third term on the right side) between the antibody concentration ak(t) and the affinity mik represents stimulation from the antibody module ABi to the antibody module ABk. In other words, the antibody concentration ai(t) equals to the sum of the stimulation from an antigen, the stimulation to another antibody module ABj and the suppression from another antibody module ABk. When stimulation is applied from antibody modules ABj of N to the antibody module ABi, the average stimulation of all the stimulation pieces thus applied is defined as the stimulation from the antibody modules ABj. Furthermore, when the antibody module ABi applies stimulation to the antibody modules ABk of N, the average of the stimulation thus applied is defined as the stimulation to the antibody module ABj.

The antibody concentration ai (t) is calculated under the precondition that the initial value of the antibody concentration of each antibody module ABi, that is, the antibody concentration ai(0) at a time 0 is set in the operating unit 3. Because the value calculated from the above equation 1 is a variation amount per minimum time of the antibody concentration ai(t), the operating unit 3 calculates the antibody concentration ai(t) at the time t based on the initial value ai(0). The antibody concentration ai(0) is the initial value when the calculation is carried out, and can be set to any value. The operating unit 3 calculates the antibody concentration ai(t) with each of the antibody module AB1 to ABn as processing targets, and outputs the antibody concentration ai(t) thus calculated to the convergence judging unit 4.

The convergence judging unit 4 judges for each antibody module ABi whether the antibody concentration ai(t) thus calculated is converged to a target value ri (convergence judgment). This target value ri is preset corresponding to the antibody concentration ai(t) of each antibody module ABi. Any value may be set as this target value ri insofar as it gives as an indication of converging the antibody concentration ai(t) of each antibody module ABi. For instance, single target value ri may be set to the respective antibody modules ABi. Alternatively, the initial value ai(0) of the antibody concentration may be set as the target value as described in the present embodiment. The convergence judging unit 4 judges "convergence" based on the antibody concentration ai(t) output from the IMS 2, in case of determining the antibody concentration ai(t) being converged to the target value ri. On the other hand, in case of judging the antibody concentration ai(t) being not converged to the target value ri, the convergence judging unit 4 judges "non-convergence". The convergence judging unit 4 may not necessarily make the judgment of "convergence" only if the antibody concentration ai(t) is perfectly converged to the target value ri, and may make the judgment of "convergence" if the antibody concentration ai(t) can be regarded as being converged to the target value ri to some level. More specifically, the convergence judging unit 4 may compare a threshold value ε with the absolute value (error) of the difference between the antibody concentration ai(t) and the target value ri. Subsequently, the convergence judging unit 4 may make the convergence judgment based on determination whether the error is less than or equal to the threshold value ε. When the judgment of "convergence" is made by the convergence judging unit 4, a control signal indicating that the antibody concentration ai is converged is output to the antibody estimating unit 7. On the other hand, when the judgment of "non-convergence" is made by the convergence judging unit 4, the control signal corresponding to the error between the present antibody concentration ai(t) and the target value ri is output to the convergence controlling unit 5.

The convergence controlling unit 5 calculates a correction value (correction parameter ul(t)) to correct the antibody concentration ai(t) so that the antibody concentration ai(t) thus calculated approaches to the target value ri. The convergence controlling unit 5 includes convergence controlling modules Cl (l = 1 to m) of m and a control selecting unit 6.

Each convergence controlling module Cl calculates the correction parameter ul(t) based on the error between the antibody concentration ai(t) and the target value ri (accurately, the control signal output from the convergence judging unit 4) by using PID control. The PID control is a controlling method of combining respective controlling methods such as proportional control, integral control and differential control, and adjusting the operation amount so as to bring a controlling-target value close to a target value. The proportional control is to determine the operation amount as a magnitude proportional to the deviation between the present value of a controlling-target value and the target value, and bring the controlling-target value close to the target value in accordance with the operation amount. PI control corresponding to the addition of the proportional control and the integral control is a method of temporally accumulating the residual deviation generated when the proportional control is carried out, and increasing the operation amount at the time when the accumulation value of the residual deviation increases to some value, thereby eliminating the residual deviation. The integral control is to converge the controlling-target value to the target value by increasing the operation amount when the difference between the present deviation and the preceding deviation is large. The PID control including not only the proportional and differential controls, but also the integral control can perform aggressive control to converge the controlling-target value to the target value quickly. In the present embodiment, the controlling-target value, the target value and the operation amount correspond to the antibody concentration ai(t), the target value ri and the correction parameter ul(t), respectively.

Convergence controlling modules Cl of m are different upon performing the PID control in the extent to which the antibody concentration ai(t) approaches to the target value ri, that is, in the correction level associated with which control should be weighted. As described above, equipment of the plural convergence controlling modules Cl is based on the consideration that variation of the antibody concentration ai(t) represented by a non-linear differential equation (the equation 1) differs in accordance with the antigen mi. More specifically, the stimulation mi from the antigen that represents existence of an opponent robot Ro is different between a case in which the opponent robot Ro is nearby or a case in which the opponent robot Ro is far. Therefore, in a case where only one convergence controlling module disused, even when the antibody concentration ai(t) can be properly controlled in an external environment under which the convergence controlling module Cl concerned exists, the antibody concentration ai(t) may not be properly controlled in a different external environment. According to the present embodiment, the control selecting unit 6 selectively utilizes one of the convergence controlling modules Cl to Cm in accordance with the external environment (that is, the antigen), thereby enhancing the convergence to the target value.

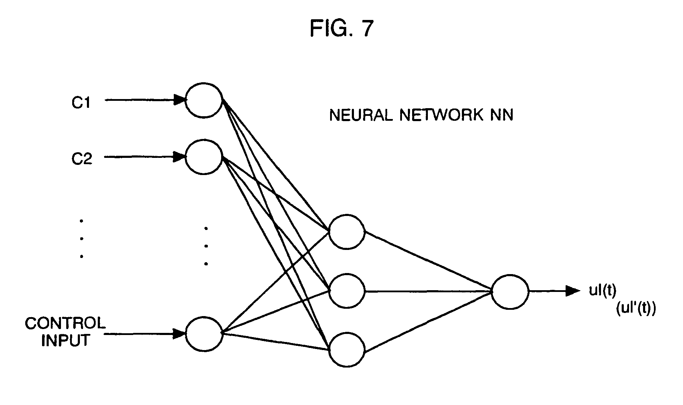

The control selecting unit 6 is constructed by a neural network NN. Fig. 7 is a diagram showing a basic construction of the neural network NN. In a hierarchical neural network including an input layer, an intermediate layer and an output layer, each of the layers is constructed by plural elements having single function. The respective elements are linked to each another with inherent weighting factors wij. In the present embodiment, m correction parameters ul(t) output from each convergence controlling module Cl and the stimulation (control input) from the antigen are input to the input layer. Furthermore, the correction parameter ul(t) that is associated with an external environment and can properly control the antibody concentration ai(t) is output from the output layer. The correction parameter ul(t) is basically selected alternatively from the correction parameters ul(t) to um(t). However, the control selecting unit 6 may select any combination of the input correction parameters ul(t) to um(t) input thereto, and output a new correction parameter ul'(t) based on the selected values because the control selecting unit 6 is constructed by the neutral network NN. In other words, the neural network NN has a function to select some convergence controlling module Cl from m convergence controlling modules Cl to Cm in accordance with the antigen. Further, the neural network NN determines the correction parameter ul(t) for correcting the antibody concentration ai(t) based on the correction parameter ul(t) calculated based on the convergence controlling module Cl thus selected.

In order to enhance the precision of the output result of the neural network NN, it is necessary to properly adjust the weighting factor wij. This adjustment (also called as study) is carried out by a method called as a back-propagation. This is a method of preparing teacher data for studying in advance and advancing the study so that the result coincides with the teacher data, thereby determining the weighting factor wij. The initial value of the weighting factor wij is given from random numbers. Input data is input to an input layer element of the neural network, the output result from the output layer element is compared with the value of the teacher data, and correction to a threshold value $\theta_j$ is repeated to advance the study.

The antibody estimating unit 7 calculates an estimation value Pi for estimating the antibody module ABi based on the variation amount of the antibody concentration ai(t). This estimation value Pi is uniquely calculated from the following equation 2.

**[Equation 2]**

$$Pi = \int_0^{tc} \{ai(t) - ai(0)\} dt$$

In the equation 2, tc represents a time at which the antibody concentration ai(t) of the antibody module ABi is converged to the target value ri, whereas the estimation value Pi is an integration value of the antibody concentration ai(t) varying until the antibody concentration ai(t) is converged to the target value ri. The antibody estimating unit 7 selects one antibody module ABi from the antibody modules ABi of n based on each estimation value Pi thus calculated. The antibody concentration ai(t) corresponds to the self-assertion degree. Thus, in a certain period (t = 0 to tc), the higher the self-assertion degree of the antibody module ABi is, the larger the estimation value Pi thereof is. Accordingly, the antibody module ABi for which the largest estimation value Pi is calculated is selected from among the antibody modules ABi of n.

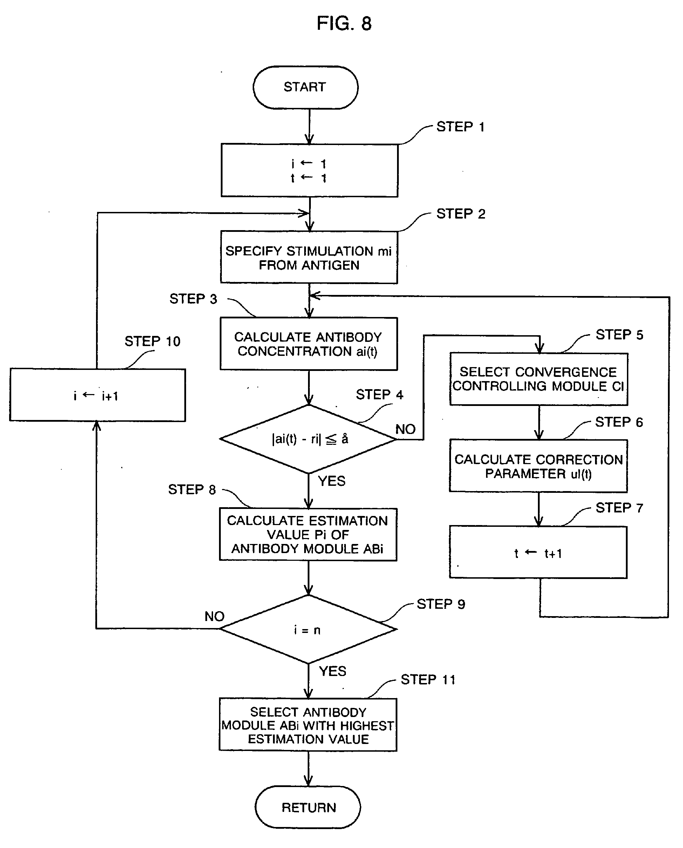

Fig. 8 is a flowchart showing the system process of the control system 1 according to the present embodiment. This routine is called at a predetermined period, and executed by the control system 1. First, in step 1, a control variable i is set to "1", and a control variable t is set to "1". The control variable i is a variable specifying an antibody module ABi to be processed, and corresponds to ID of the antibody module ABi. In addition, the control variable t is a variable defining the time in one cycle of the routine. In other words, the antibody module AB1 having the ID "1" is selected as a processing target, while the time is initially set to 1, in the step 1. The reason why the initial time is set to "1" resides in that it is unnecessary to calculate the antibody concentration ai(0) at the time t=0 because the antibody concentration ai(0) at the time t=0 is given as an initial value in advance.

In step 2, the stimulation mi from the antigen is specified. The simulation mi is determined under the precondition that the operating unit 3 acquires information on the antigen (that is, information on an opponent robot Ro and information on a destination) as a control input. The operating unit 3 calculates the stimulation mi quantitatively based on the control input. For example, it is applied as a calculation method of the stimulation mi to multiply the distance to a detected robot Ro by a coefficient according to a predetermined rule or the like. Subsequently, the operating unit 3 calculates the antibody concentration ai(t) of the antibody module ABi at the present time t (step 3). When the antibody concentration ai(t) is calculated, it is necessary to properly set the correction parameter ul(t). However, since no correction parameter ul(t) is calculated in the calculation of the antibody concentration ai (1), 0 or any initial value is preferably used for the correction parameter ul(t).

In step 4, the antibody concentration ai (t) of the antibody module ABi is compared with the target value ri to judge whether the antibody concentration ai(t) is converged to the target value ri. Specifically, the convergence judging unit 4 calculates the error between the antibody concentration ai(t) and the target value ri, and judges whether the error is less than or equal to the threshold value $\varepsilon$. Through experiments or simulations, this threshold value $\varepsilon$ is preset as the maximum level value of the error at which the antibody concentration ai(t) can be regarded as being converged to the target value ri. Thus, if a negative judgment is made in the step 4 (if the error between both the values is larger than the threshold value $\varepsilon$), a judgment of "non-convergence" is made, and the process goes to the next step 5. On the other hand, if a positive judgment is made in the step 4 (if the error between both the values is less than or equal to the threshold value $\varepsilon$), a judgment of "convergence" is made, and the processing goes to a subsequent step 8.

In the step 5 subsequent to the step 4, the control selecting unit 6 selects any convergence controlling module Cl in accordance with the external environment (the antigen). The convergence controlling module Cl thus selected carries out the PID control based on the difference between the antibody concentration ai(t) and the target value ri to calculate the correction parameter ul(t) (step 6). In the present embodiment, the selection of the convergence controllingmodule Cl is carried out with the coupling weighting factor Kij of the neural network NN in connection with the fact that the control selecting unit 6 is constructed by the neural network NN. Specifically, each convergence controlling module Cl individually calculates each correction parameter ul(t) individually based on the difference between the antibody concentration ai(t) and the target value ri. Subsequently, each correction parameter ul(t) individually calculated and the stimulation mi from the antigen are input to the input layer of the neural network NN. The correction parameter ul(t) calculated by some controlling module Cl is selectively output from the output layer by complying with the coupling weighting factor Kij studied in advance. Alternatively, the correction parameter ul'(t) calculated on the basis of any combination of the correction parameters ul(t) to um(t) is output from the output layer. In other words, one or two or more convergence controlling modules Cl corresponding to the antigen are selected from among the convergence controlling modules Cl of m by complying with the coupling weighting factor Kij of the neural network NN.

In step 7, the control variable t is set to [t+1], and the processing returns to the step 3 described above. A new antibody concentration ai (t+1) is calculated based on the correction parameter ul(t), and the above processing is repeated until the antibody concentration ai(t) is converged to the target value ri.

On the other hand, if the judgment of "convergence" is made, the estimation value Pi of the antibody module ABi is calculated in the step 8. This estimation value Pi is calculated as an integration value of the antibody concentration ai(t) that is integrated until a time tc in which the antibody concentration ai(t) is converged to the target value ri, as shown in the above equation 2.

It is judged in step 9 whether the control variable i coincides with the number n of the antibody modules ABi. In the present embodiment, the control variable i is stepwise controlled one by one. Therefore, if the estimation value Pi is calculated for all the antibody modules ABi of n, the positive judgment is made in the step 9 and thus the process goes to step 11. On the other hand, if the estimation value Pi is not calculated for all the antibody modules ABi of n, the negative judgment is made in the step 9, and thus the process goes to the subsequent step 10. In the step 10, the control variable i is set to [i+1], and the process from the steps 2 to 8 described above is repeated until the estimation value Pi is calculated for all the antibody modules ABi of n.

In the step 11, the antibody module ABi for which the corresponding estimation value Pi is the highest among the estimation values Pi thus calculated is selected. Subsequently, the process exits the entire routine. The control content defined by the antibody module ABi selected in this processing cycle is output (control output). Here, various actuators (not shown) operate in accordance with the control content, thereby controlling the operation of the robot Ro. The processing cycle as described above is successively repeated, and the robot Ro is successively controlled according to the control content defined by the antibody module ABi for which the corresponding estimation value Pi is the highest, thereby controlling the behavior of the robot Ro autonomously.

As described above, according to the present embodiment, an antibody module ABi is alternatively selected from among plural antibody modules AB1 to ABn based on the stimulant/suppressive action among the antibodies in the immune network. By imitating the immune system in the living body as described above, a proper antibody module ABi is selected on the basis of the interaction among the antibody modules ABi so that the robot Ro can take the optimum behavior according to the present external environment. Accordingly, each robot Ro is controlled in accordance with the control content defined by the antibody module ABi thus selected. Thus, the behaviors of the robots Ro can be autonomously controlled so that the each of the robots Ro move to its destination with avoiding collision against another robots Ro.

Furthermore, according to the present embodiment, the antibody concentration ai(t) is varied with some time interval by feeding back the antibody concentration ai(t). Therefore, the optimum antibody module ABi can be selected while looking ahead timely to some extent, so that reliability of control can be enhanced.

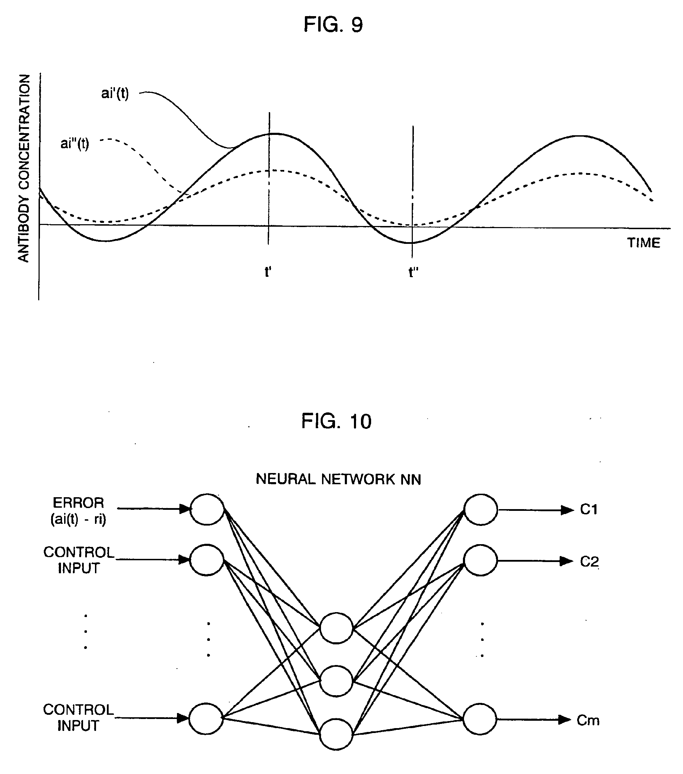

Execution of only the feedback may induce such a case that the antibody concentration ai(t) has a value called a periodic solution. Fig. 9 is a diagram showing an example of the periodic solution. As shown in Fig. 9, the antibody concentration ai'(t) of an antibody module ABi' is larger than that of an antibody module ABi" at a time t'. However, at a time t" (t"≠t'), the antibody concentration ai"(t) of the antibody module ABi is larger than that of the antibody module ABi' . If the antibody concentration ai(t) has a periodic solution, the antibody module ABi having the maximum antibody concentration ai differs in accordance with the selecting time t. As described above, the robot Ro is operated according to the control content defined by the antibody module ABi. Therefore, when the antibody module ABi to be selected varies with respect to the time, the optimum antibody module ABi may not be selected. Accordingly, under the condition that such a periodic solution occurs, the robots Ro may collide against each other or may take a time longer than necessary to reach a destination. In this connection, according to the present embodiment, the antibody concentration ai(t) is converged to the target value ri(t) by using the convergence controlling unit 5, thereby suppressing occurrence of the periodic solution. In addition, the integration value of the antibody concentration ai(t) varying until the antibody concentration ai(t) is converged is used as the estimation value Pi. Therefore, even when the antibody concentration ai(t) of an antibody module ABi is temporarily increased, an antibody module ABi whose antibody concentration ai(t) is larger as a whole within this time range is estimated to be the best without being disturbed by the temporary increase in antibody concentration.

In the convergence controlling unit 5, plural convergence controlling modules Cl are equipped, and the convergence controlling modules Cl of m are properly used in accordance with the external environment (that is, the antigen). Accordingly, the antibody concentration ai(t) can be effectively converged to the target value ri, thereby shortening the time required for the convergence. As a result, the control content can be determined in a short time, and the robot Ro can be efficiently controlled. For example, if the convergence controlling modules Cl are not properly used, the control of the antibody concentration ai(t) is not properly performed, and thus the robots Ro may collide against each other under the same situation. However, such collision can be prevented, by properly using the convergence controlling modules Cl. This is because the neural network NN stores the control module Cl that could avoid collision under a previous situation, through the prior study of the neural network NN constituting the control selecting unit 6. Therefore, the convergence controlling modules Cl can be properly used in conformity with the external environment. Thus, the antibody concentration ai(t) can be properly controlled at all times, and the estimation value Pi of the antibody module ABi having the optimum control content defined therein is set as a maximum value. Accordingly, the stability of the autonomous operation of the robot Ro is assured, thereby controlling the robot Ro effectively.

In the above-described embodiment, each convergence controlling module Cl carries out the PID control to calculate the correction parameter ul(t). However, other methods may be applied to the present invention. For example, various controlling methods based on the neural network, the genetic algorithm or recent control theories may be applied to the present invention.

Fig. 10 is a diagram showing a modification of the convergence controlling unit 5. In the above-described embodiment, the control selecting unit 6 is equipped at the subsequent stage of the convergence controlling module Cl. However, the control selecting unit 6 may be equipped at the front stage of the convergence controlling module Cl as shown in Fig. 10. With even such a construction, the same function as the convergence controlling unit 5 can be implemented by preparing the teacher data for studying, advancing the study so that the result coincides with the teacher data and determining the weighting factor wij. That is, the control selecting unit 6 selects a convergence controlling module Cl having some correction level in accordance with the external environment (the antigen), from the convergence controlling modules Cl to Cm constructed by plural correction levels different in the extent to which the antibody concentration ai(t) approaches to the target value ri. Subsequently, the selected convergence controlling module Cl calculates the correction parameter. In addition, the control selecting unit 6 may be constructed by such a switch that the output of the convergence controlling module Cl is selectively switched, in place of the neural network NN. In this case, the control selecting unit 6 can perform proper adjustment by using a genetic algorithm or the like.

Furthermore, the control target device to be controlled by the control system 1 may be applied to not only the robot Ro, but also various devices such as an engine, a motor, etc. to which autonomous control can be applied. For instance, in case that the control system 1 autonomously controls an engine, a water temperature, an accelerator divergence, a vehicle speed, an engine revolution speed and the state quantities thereof may be used as the antigen. By defining the stimulating condition corresponding to the antigen and the control content to be executed under the stimulating condition concerned, the autonomous engine control can be performed based on the stimulant/suppressive action of the antibody similarly to the above-described embodiment.

As described above, according to the present invention, an antibody module is selected from plural antibody modules based on a stimulating action and a suppressing action among antibodies in an immune network. By imitating the immune system of a living body, a proper antibody module with which a control target device can take the optimum behavior in conformity with a present external environment can be selected on the basis of interaction among the antibody modules. Furthermore, when the antibody concentration is calculated, the antibody concentration is corrected so as to converge to the target value, thereby suppressing occurrence of a periodic solution.

While the present invention has been disclosed in terms of the preferred embodiments in order to facilitate better understanding of the invention, it should be appreciated that the invention can be embodied in various ways without departing from the principle of the invention. Therefore, the invention should be understood to include all possible embodiments which can be embodied without departing from the principle of the invention set out in the appended claims.

**Claims**

1. A control system (1) for selecting an antibody module from plural antibody modules based on a stimulating action and a suppressing action of an antibody in an immune network and controlling a control target device in accordance with a control content defined by the antibody module, comprising:

   plural antibody modules (ABi) for which stimulating conditions to the control target device, control contents associated with the stimulating conditions and affinity to other antibody modules are defined, the respective stimulating conditions being different from one another;
   an operating unit (3) for calculating an antibody concentration (ai(t)) serving as an index when each of the antibody modules is selected as a processing target;
   a convergence judging unit (4) for judging based on the calculated antibody concentration and a predetermined target value (ri) whether the antibody concentration is converged to the target value;
   a convergence controlling unit (5) for calculating a correction parameter (ul(t)) to correct the antibody concentration so that the antibody concentration approaches to the target value if the convergence judging unit (4) judges that the antibody concentration is not converged to the target value; and
   an antibody estimating unit (7) for calculating an estimation value (Pi) to estimate the antibody module if the convergence judging unit (4) judges that the antibody concentration is converged to the target value, and selecting some antibody module from the plural antibody modules based on each estimation value calculated for the plural antibody modules.

2. The control system (1) according to claim 1, **characterized in that** the convergence controlling unit (5) comprises plural convergence controlling modules (CI) for calculating the correction parameter so that a degree of bringing the antibody concentration close to the target value is different among the convergence controlling modules, and a control selecting unit (6) for selecting a convergence controlling module from the plural convergence controlling modules in accordance with an external environment of the control target device, in which the correction parameter for correcting the antibody concentration is determined on the basis of the correction parameter calculated by the convergence controlling module thus selected.

3. The control system (1) according to claim 2, **characterized in that** each of the convergence controlling modules is adapted to calculate the correction parameter by using a genetic algorithm, a neural network or PID control.

4. The control system (1) according to claim 2 or 3, **characterized in that** the control selecting unit (6) is adapted to select some convergence controlling module from the plural convergence controlling modules by using the neural network or the genetic algorithm.

5. The control system (1) according to any one of claims 1 to 4, **characterized in that** the antibody estimating unit (7) is adapted to calculate an integration value of the antibody concentration until the antibody concentration is converged to the target value as the estimation value, and is adapted to select an antibody module that corresponds to the maximum calculated estimation value.

6. A control method for selecting, on the basis of a stimulating action and a suppressing action of an antibody in an immune network, some antibody module from plural antibody modules (ABi) for which stimulating conditions to a control target device, control contents associated with the stimulating conditions and affinity to other antibody modules are defined, the respective stimulating conditions being different from one another, and controlling the control target device in accordance with a control content defined by the antibody module thus selected, comprising:

   a first step of calculating an antibody concentration (ai(t)) serving as an index when each of the antibody modules is selected as a processing target;
   a second step of judging, on the basis of the calculated antibody concentration (ai(t)) and a predetermined target value (ri), whether the antibody concentration is converged to the target value ;

a third step of calculating a correction parameter (ul(t)) to correct the antibody concentration so that the antibody concentration approaches to the target value if it is judged by the second step that the antibody concentration is not converged to the target value;

a fourth step of calculating an estimation value (Pi) to estimate the antibody module if it is judged in the second step that the antibody concentration is converged to the target value; and

a fifth step of selecting some antibody module from the plural antibody modules on the basis of each estimation value calculated for the plural antibody modules.

7. The control method according to claim 6, **characterized in that** the third step comprises steps of calculating plural correction parameters so that a degree of bringing the antibody concentration close to the target value is different from each other, selecting some correction parameter from the plural correction parameters in accordance with an external environment of the control target device, and determining a correction parameter to correct the antibody concentration on the basis of the correction parameter thus selected.

8. The control method according to claim 6, **characterized in that** the third step comprises steps of selecting, in accordance with an external environment of the control target device, some correction level from plural correction levels in which a degree of bringing the antibody concentration close to the target value is different from each other, and calculating the correction parameter on the basis of the correction level thus selected.

9. The control method according to any one of claims 6 to 8, **characterized in that** the fourth step comprises the step of calculating an integration value of the antibody concentration until the antibody concentration is converged to the target value as the estimation value, and the fifth step comprises the step of selecting an antibody module that provides the maximum calculated estimation value.

## Patentansprüche

1. Steuersystem (1) zum Auswählen eines Antikörpermoduls von mehreren Antikörpermodulen basierend auf einer stimulierenden Wirkung und einer hemmenden Wirkung eines Antikörpers in einem Immunnetzwerk und zum Steuern einer Steuerzielvorrichtung gemäß einem durch das Antikörpermodul definierten Steuerinhalt, mit:

mehreren Antikörpermodulen (ABi), für die Stimulationsbedingungen für die Steuerzielvorrichtung, den Stimulationsbedingungen zugeordnete Steuerinhalte und die Affinität bezüglich anderen Antikörpermodulen definiert sind, wobei sich die jeweiligen Stimulationsbedingungen voneinander unterscheiden;

einer Recheneinheit (3) zum Berechnen einer Antikörperkonzentration (ai(t)), die als ein Index dient, wenn jeweils eines der Antikörpermodule als ein Verarbeitungsziel ausgewählt wird;

einer Konvergenzentscheidungseinheit (4) zum Entscheiden, ob die Antikörperkonzentration zu einem Sollwert hin konvergiert ist, basierend auf der berechneten Antikörperkonzentration und einem vorgegebenen Sollwert (ri);

einer Konvergenzsteuerungseinheit (5) zum Berechnen eines Korrekturparameters (ul(t)) zum Korrigieren der Antikörperkonzentration derart, dass die Antikörperkonzentration sich dem Sollwert nähert, wenn die Konvergenzentscheidungseinheit (4) entscheidet, dass die Antikörperkonzentration nicht zum Sollwert hin konvergiert ist; und

einer Antikörperschätzeinheit (7) zum Berechnen eines Schätzwertes (Pi) zum Schätzen des Antikörpermoduls, wenn die Konvergenzentscheidungseinheit (4) entscheidet, dass die Antikörperkonzentration zum Sollwert hin konvergiert ist, und zum Auswählen eines Antikörpermoduls von den mehreren Antikörpermodulen basierend auf jedem für die mehreren Antikörpermodule berechneten Schätzwert.

2. Steuersystem (1) nach Anspruch 1, **dadurch gekennzeichnet, dass** die Konvergenzsteuerungseinheit (5) mehrere Konvergenzsteuerungsmodule (C1) zum Berechnen des Korrekturparameters derart aufweist, dass der Grad, mit dem die Antikörperkonzentration in die Nähe des Sollwertes gebracht wird, zwischen den Konvergenzsteuerungsmodulen verschieden ist, und eine Steuerungsauswahleinheit (6) zum Auswählen eines Konvergenzsteuerungsmoduls von den mehreren Konvergenzsteuerungsmodulen gemäß einer Außenumgebung der Steuerzielvorrichtung, wobei der Korrekturparameter zum Korrigieren der Antikörperkonzentration auf der Basis des durch das derart ausgewählte Konvergenzsteuerungsmodul berechneten Korrekturparameters bestimmt wird.

3. Steuersystem (1) nach Anspruch 2, **dadurch gekennzeichnet, dass** jedes der Konvergenzsteuerungsmodule dazu geeignet ist, den Korrekturparameter unter Verwendung eines genetischen Algorithmus, eines neuralen Netzwerks oder einer PID-Steuerung zu berechnen.

**4.** Steuersystem (1) nach Anspruch 2 oder 3, **dadurch gekennzeichnet, dass** die Steuerungsauswahleinheit (6) dazu geeignet ist, ein Konvergenzsteuerungsmodul unter Verwendung des neuralen Netzwerks oder des genetischen Algorithmus von den mehreren Konvergenzsteuerungsmodulen auszuwählen.

**5.** Steuersystem (1) nach einem der Ansprüche 1 bis 4, **dadurch gekennzeichnet, dass** die Antikörperschätzeinheit (7) dazu geeignet ist, einen Integrationswert der Antikörperkonzentration, bis die Antikörperkonzentration zum Sollwert hin konvergiert ist, als den Schätzwert zu berechnen, und dazu geeignet ist, ein dem maximalen berechneten Schätzwert entsprechendes Antikörpermodul auszuwählen.

**6.** Steuerverfahren zum Auswählen, auf der Basis einer stimulierenden Wirkung und einer hemmenden Wirkung eines Antikörpers in einem Immunnetzwerk, eines Antikörpermoduls von mehreren Antikörpermodulen (ABi), für die Stimulationsbedingungen für eine Steuerzielvorrichtung, den Stimulationsbedingungen entsprechende Steuerinhalte und die Affinität bezüglich anderen Antikörpermodulen definiert sind, wobei die jeweiligen Stimulationsbedingungen voneinander verschieden sind, und zum Steuern der Steuerzielvorrichtung gemäß einem durch das derart ausgewählte Antikörpermodul definierten Steuerinhalt, mit:

einem ersten Schritt zum Berechnen einer Antikörperkonzentration ($a_i(t)$), die als ein Index für die Auswahl eines Antikörpermoduls als ein Verarbeitungsziel dient;
einem zweiten Schritt zum Entscheiden, ob die Antikörperkonzentration zum Sollwert hin konvergiert ist, basierend auf der berechneten Antikörperkonzentration ($a_i(t)$) und einem vorgegebenen Sollwert ($r_i$);
einem dritten Schritt zum Berechnen eines Korrekturparameters ($u_l(t)$) zum Korrigieren der Antikörperkonzentration derart, dass die Antikörperkonzentration sich dem Sollwert nähert, wenn im zweiten Schritt entschieden wird, dass die Antikörperkonzentration nicht zum Sollwert hin konvergiert ist;
einem vierten Schritt zum Berechnen eines Schätzwertes ($P_i$) zum Schätzen des Antikörpermoduls, wenn im zweiten Schritt entschieden wird, dass die Antikörperkonzentration zum Sollwert hin konvergiert ist; und
einem fünften Schritt zum Auswählen eines Antikörpermoduls von den mehreren Antikörpermodulen auf der Basis jedes für die mehreren Antikörpermodule berechneten Schätzwertes.

**7.** Steuerverfahren nach Anspruch 6, **dadurch gekennzeichnet, dass** der dritte Schritt die Schritte zum Berechnen mehrerer Korrekturparameter derart, dass Grade, mit denen die Antikörperkonzentration in die Nähe des Sollwertes gebracht werden, sich voneinander unterscheiden, zum Auswählen eines Korrekturparameters von den mehreren Korrekturparametern gemäß einer Außenumgebung der Steuerzielvorrichtung, und zum Bestimmen eines Korrekturparameters zum Korrigieren der Antikörperkonzentration auf der Basis des derart ausgewählten Korrekturparameters aufweist.

**8.** Steuerverfahren nach Anspruch 6, **dadurch gekennzeichnet, dass** der dritte Schritt Schritte zum Auswählen einer Korrekturebene gemäß einer Außenumgebung der Steuerzielvorrichtung von mehreren Korrekturebenen, in denen Grade, mit denen die Antikörperkonzentration in die Nähe des Sollwertes gebracht werden, voneinander verschieden sind, und zum Berechnen des Korrekturparameters auf der Basis der derart ausgewählten Korrekturebene aufweist.

**9.** Steuerverfahren nach einem der Ansprüche 6 bis 8, **dadurch gekennzeichnet, dass** der vierte Schritt einen Schritt zum Berechnen eines Integrationswertes der Antikörperkonzentration, bis die Antikörperkonzentration zum Sollwert hin konvergiert ist, als den Schätzwert aufweist, und der fünfte Schritt einen Schritt zum Auswählen eines Antikörpermoduls aufweist, durch das der maximale berechnete Schätzwert bereitgestellt wird.

**Revendications**

**1.** Système de commande (1) pour sélectionner un module d'anticorps parmi plusieurs modules d'anticorps sur la base d'une action de stimulation et d'une action de suppression d'un anticorps dans un réseau immunitaire et commander un dispositif cible de commande selon une teneur de commande définie par le module d'anticorps, comprenant :

plusieurs modules d'anticorps (ABi) pour lesquels les conditions de stimulation pour le dispositif cible de commande, les teneurs de commande associées avec les conditions de stimulation et l'affinité pour d'autres modules d'anticorps sont définies, les conditions de stimulation respectives étant différentes les unes des autres ;

une unité d'exploitation (3) pour calculer une concentration d'anticorps (ai(t)) servant d'indice quand chacun des modules d'anticorps est sélectionné comme cible de traitement ;
une unité de jugement de convergence (4) pour juger sur la base de la concentration d'anticorps calculée et d'une valeur cible prédéterminée (ri) si la concentration d'anticorps converge vers la valeur cible ;
une unité de commande de convergence (5) pour calculer un paramètre de correction (ul(t)) pour corriger la concentration d'anticorps de sorte que la concentration d'anticorps tende vers la valeur cible si l'unité de jugement de convergence (4) juge que la concentration d'anticorps ne converge pas vers la valeur cible ; et
une unité d'estimation d'anticorps (7) pour calculer une valeur d'estimation (Pi) pour estimer le module d'anticorps si l'unité de jugement de convergence (4) juge que la concentration d'anticorps converge vers la valeur cible, et sélectionner un certain module d'anticorps parmi les plusieurs modules d'anticorps sur la base de chaque valeur d'estimation calculée pour les plusieurs modules d'anticorps.

2. Système de commande (1) selon la revendication 1 **caractérisé en ce que** l'unité de commande de convergence (5) comprend plusieurs modules de commande de convergence (Cl) pour calculer le paramètre de correction de sorte qu'un degré de rapprochement de la concentration d'anticorps de la valeur cible est différent parmi les modules de commande de convergence, et une unité de sélection de commande (6) pour sélectionner un module de commande de convergence parmi les plusieurs modules de commande de convergence selon un environnement externe du dispositif cible de commande, où le paramètre de correction pour corriger la concentration d'anticorps est déterminé sur la base du paramètre de correction calculé par le module de commande de convergence ainsi sélectionné.

3. Système de commande (1) selon la revendication 2 **caractérisé en ce que** chacun des modules de commande de convergence est adapté pour calculer le paramètre de correction en utilisant un algorithme génétique, un réseau neural ou une commande PID.

4. Système de commande (1) selon la revendication 2 ou 3 **caractérisé en ce que** l'unité de sélection de commande (6) est adaptée pour sélectionner un certain module de commande de convergence parmi les plusieurs modules de commande de convergence en utilisant le réseau neural ou l'algorithme génétique.

5. Système de commande (1) selon l'une quelconque des revendications 1 à 4 **caractérisé en ce que** l'unité d'estimation d'anticorps (7) est adaptée pour calculer une valeur d'intégration de la concentration d'anticorps jusqu'à ce que la concentration d'anticorps converge vers la valeur cible comme valeur d'estimation, et est adaptée pour sélectionner un module d'anticorps qui correspond à la valeur d'estimation calculée maximale.

6. Procédé de commande pour sélectionner, sur la base d'une action de stimulation et d'une action de suppression d'un anticorps dans un réseau immunitaire, un certain module d'anticorps parmi plusieurs modules d'anticorps (ABi) pour lesquels les conditions de stimulation pour un dispositif cible de commande, les teneurs de commande associées avec les conditions de stimulation et l'affinité pour d'autres modules d'anticorps sont définies, les conditions de stimulation respectives étant différentes les unes des autres, et commander le dispositif cible de commande selon une teneur de commande définie par le module d'anticorps ainsi sélectionné, comprenant :

une première étape de calcul d'une concentration d'anticorps (ai(t)) servant d'indice quand chacun des modules d'anticorps est sélectionné comme cible de traitement ;
une seconde étape de jugement, sur la base de la concentration d'anticorps calculée (ai(t)) et d'une valeur cible prédéterminée (ri) si la concentration d'anticorps converge vers la valeur cible ;
une troisième étape de calcul d'un paramètre de correction (ul(t)) pour corriger la concentration d'anticorps de sorte que la concentration d'anticorps tende vers la valeur cible s'il est jugé par la seconde étape que la concentration d'anticorps ne converge pas vers la valeur cible ;
une quatrième étape de calcul d'une valeur d'estimation (Pi) pour estimer le module d'anticorps s'il est jugé dans la seconde étape que la concentration d'anticorps converge vers la valeur cible ; et
une cinquième étape de sélection d'un certain module d'anticorps parmi les plusieurs modules d'anticorps sur la base de chaque valeur d'estimation calculée pour les plusieurs modules d'anticorps.

7. Procédé de commande selon la revendication 6 **caractérisé en ce que** la troisième étape comprend des étapes de calcul de plusieurs paramètres de correction de sorte qu'un degré de rapprochement de la concentration d'anticorps de la valeur cible est différent de chaque autre, sélection d'un certain paramètre de correction parmi les plusieurs paramètres de correction selon un environnement externe du dispositif cible de commande, et détermination d'un paramètre de correction pour corriger la concentration d'anticorps sur la base du paramètre de correction ainsi sélectionné.

**8.** Procédé de commande selon la revendication 6 **caractérisé en ce que** la troisième étape comprend des étapes de sélection, selon un environnement externe du dispositif cible de commande, d'un certain niveau de correction parmi plusieurs niveaux de correction où un degré de rapprochement de la concentration d'anticorps de la valeur cible est différent de chaque autre, et de calcul du paramètre de correction sur la base du niveau de correction ainsi sélectionné.

**9.** Procédé de commande selon l'une quelconque des revendications 6 à 8 **caractérisé en ce que** la quatrième étape comprend l'étape de calcul d'une valeur d'intégration de la concentration d'anticorps jusqu'à ce que la concentration d'anticorps converge vers la valeur cible comme valeur d'estimation, et la cinquième étape comprend l'étape de sélection d'un module d'anticorps qui donne la valeur d'estimation calculée maximale.

## FIG. 1

FIG. 2

## FIG. 3

(a)

(b)

## FIG. 4

|  | ANTIGEN |
|---|---|
| ANTIGENS CONCERNING DESTINATION | [R, D], [St·R, D], [St, D], [St·L, D], [L, D] |
| ANTIGENS CONCERNING ANOTHER ROBOT Ro | [L, Robot], [St, Robot], [R, Robot] |

## FIG. 5

| ID | PARATOPE | | IDIOTOPE | |
|---|---|---|---|---|
| | STIMULATING CONDITION | CONTROL CONTENT | ID | AFFINITY |
| 1 | [R, D] | [R] | 8 | m18 |
| 2 | [St·R, D] | [St·R] | 8 | m28 |
| 3 | [St, D] | [St] | 7 | m37 |
| 4 | [St·L, D] | [St·L] | 6 | m46 |
| 5 | [L, D] | [L] | 6 | m56 |
| 6 | [L, Robot] | [St·R] | 4<br>5 | m64<br>m65 |
| 7 | [St, Robot] | [St·R] | 3 | m73 |
| 8 | [R, Robot] | [St·L] | 1<br>2 | m81<br>m82 |

## FIG. 6

ANTIGEN (CONTROL INPUT)

STIMULATION mi FROM ANTIGEN

ANTIBODY MODULE ABk

STIMULATION mik TO ANTIBODY MODULE ABk

ANTIBODY MODULE ABi

STIMULATION mji FROM ANTIBODY MODULE ABj

ANTIBODY MODULE ABj

FIG. 7

NEURAL NETWORK NN

C1

C2

CONTROL
INPUT

ul(t)
(ul'(t))

# FIG. 8

```
                          ┌─────────────┐
                          │    START    │
                          └─────────────┘
                                 │
                                 ▼                        ┌─ STEP 1
                          ┌─────────────┐
                          │   i ← 1     │
                          │   t ← 1     │
                          └─────────────┘
                                 │
                                 ▼                        ┌─ STEP 2
                          ┌──────────────────┐
                          │ SPECIFY STIMULATION mi │
                          │ FROM ANTIGEN     │
                          └──────────────────┘
                                 │
        STEP 3 ─┐                ▼
                          ┌──────────────────┐            ┌─ STEP 5
   STEP 10 ─┐   │ CALCULATE ANTIBODY │        ┌──────────────────┐
            │   │ CONCENTRATION ai(t) │       │ SELECT CONVERGENCE │
  ┌──────────┐  └──────────────────┘         │ CONTROLLING MODULE Cl │
  │  i ← i+1 │           │                    └──────────────────┘
  └──────────┘           ▼      STEP 4                 │       ┌─ STEP 6
                    ◇──────────────◇  NO      ┌──────────────────┐
                   │ |ai(t) - ri| ≦ å │─────▶  │ CALCULATE CORRECTION │
                    ◇──────────────◇          │ PARAMETER ul(t)   │
                           │ YES              └──────────────────┘
        STEP 8 ─┐          ▼                          │      ┌─ STEP 7
              ┌──────────────────┐            ┌──────────────────┐
              │ CALCULATE ESTIMATION │        │     t ← t+1      │
              │ VALUE Pi OF      │            └──────────────────┘
              │ ANTIBODY MODULE ABi │
              └──────────────────┘
                       │
              NO       ▼          STEP 9
              ◇──────────────◇
             │    i = n      │
              ◇──────────────◇
                       │ YES        ┌─ STEP 11
              ┌──────────────────┐
              │ SELECT ANTIBODY  │
              │ MODULE ABi WITH HIGHEST │
              │ ESTIMATION VALUE │
              └──────────────────┘
                       │
                       ▼
                ┌─────────────┐
                │   RETURN    │
                └─────────────┘
```

## FIG. 9

## FIG. 10

NEURAL NETWORK NN

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- An Emergent Approach to Construct Behavior Arbitration Mechanism for Autonomous Mobile Robot. *Society of Instrument and Control Engineers,* 09 January 1997, vol. 33 (1), 1-9